# FASCICULE DE BREVET EUROPEEN

(11) **EP 3 149 515 B1**
(45) Date de publication et mention de la délivrance du brevet: **08.05.2019**
(21) Numéro de dépôt: 15726060.5
(22) Date de dépôt: 21.05.2015
(51) Int. Cl.: G01T 1/04

(54) **MATERIAU POUR DOSIMETRES RPE**
MATERIAL FÜR EPR-DOSIMETER
MATERIAL FOR EPR DOSIMETERS

(30) Priorité: 28.05.2014 FR 1454828
(43) Date de publication de la demande: 05.04.2017
(73) Titulaire: Institut de Radioprotection et de Sûreté Nucléaire, 92260 Fontenay aux Roses (FR)
(72) Inventeur: TROMPIER, François, F-92260 Fontenay aux Roses (FR)
(74) Mandataire: Decorchemont, Audrey Véronique Christèle
(86) Numéro de dépôt international: PCT/EP2015/061288
(87) Numéro de publication internationale: WO 2015/181047

(56) Documents cités:
- WO-A1-2015/004176
- WO-A2-2004/017095
- US-A- 4 668 714
- SAMOLADAS ET AL: "Photochromic behavior of spiropyran in polystyrene and polycaprolactone thin films - Effect of UV absorber and antioxidant compound", DYES AND PIGMENTS, ELSEVIER APPLIED SCIENCE PUBLISHERS. BARKING, GB, vol. 76, no. 2, 14 septembre 2007 (2007-09-14), pages 386-393, XP022245320, ISSN: 0143-7208, DOI: 10.1016/J.DYEPIG.2006.09.012

## Description

L'invention concerne la réalisation de dosimètres destinés à être soumis à un rayonnement ionisant, et dont la dose de rayonnement ionisant reçue peut être mesurée par des techniques spectroscopiques exploitant le phénomène physique de résonnance paramagnétique électronique (RPE), encore appelée résonnance de spin électronique.

### ARRIERE-PLAN TECHNOLOGIQUE DE L'INVENTION

La spectroscopie RPE est une technique de mesure permettant d'évaluer la dose de rayonnement ionisant reçue par un échantillon de matière. L'on sait que cette technique s'applique à des matériaux susceptibles de donner lieu à des espèces comportant des électrons non appariés, notamment des espèces radicalaires paramagnétiques.

La spectroscopie RPE connaît de nombreuses applications en matière de dosimétrie, comme la datation d'échantillons, l'estimation de la dose reçue lors d'accidents radiologiques, l'identification de produits alimentaires irradiés, ou encore l'étalonnage et le contrôle de sources de rayonnement.

Pour effectuer de telles mesures, on soumet des échantillons calibrés appelés dosimètres à une dose déterminée de rayonnement ionisant, et on établit des courbes d'étalonnage reliant l'amplitude entre deux pics de la dérivée du spectre d'absorption du dosimètre irradié à ladite dose de rayonnement ionisant.

Le document US4668714 A concerne la fabrication de dosimètres pour la spectroscopie RPE comportant de l'alanine.

Un matériau dosimétrique couramment utilisé est la L-α-alanine, qui est un acide aminé, pour lequel qui la dose absorbée est proche de celle absorbée d'un tissu biologique ou de l'eau pour un même flux de photons. Ses espèces paramagnétiques radio-induites sont très stables dans des conditions normales de température et d'humidité. En particulier, l'intensité du spectre RPE de la L-α-alanine irradié est stable sur des durées de l'ordre de plusieurs mois.

A cet effet, on élabore des pastilles de L-α-alanine à partir de poudre de L-α-alanine amalgamée au moyen d'un liant tel que par exemple du polystyrène ou du polychlorure de vinyle, de la paraffine ou du silicone. Les pastilles, habituellement élaborées par pressage à température ambiante ou légèrement plus élevée par exemple (50°C pour la paraffine), sont généralement placées pour irradiation dans un conteneur qui est entouré d'une matière reproduisant les caractéristiques d'absorption d'un tissu à traverser par le rayonnement ionisant. Après irradiation de l'ensemble, les pastilles sont extraites pour en estimer leur dose d'irradiation à partir de la mesure par spectroscopie RPE.

Les pastilles habituelles ont des diamètres de l'ordre de 3 à 5 millimètres, pour une épaisseur de 2 à 4 millimètres. Pour des tailles de champs de rayonnements de faible dimension typiquement, inférieures à 10 mm, les pastilles habituellement utilisées, du fait de leur dimension, ne permettent pas de déterminer correctement la dose maximale de radiation délivrée. En effet, les pastilles mesurent une dose moyenne dans le volume occupé par la pastille et non pas la dose maximale. Pour ce type de dosimétrie, comme par exemple dans le secteur médical, pour les applications de radio-chirurgie ou de radiothérapie stéréotaxique, ou encore les irradiations en radiobiologie il conviendrait de réaliser des pastilles de taille inférieure, de dimension millimétrique, ce qui semble difficile à réaliser avec les techniques classiques de production et présentent des inconvénients, notamment du fait de leur fragilité qui rend leur manipulation délicate.

### OBJET DE L'INVENTION

L'invention a pour but de pallier les inconvénients précités, en proposant un matériau facilitant la réalisation de dosimètres de radiations ionisantes mesurés par spectroscopie RPE dont les dimensions et les formes peuvent être plus librement déterminées.

### PRESENTATION DE L'INVENTION

En vue de la réalisation de ce but, on propose un matériau pour la réalisation de dosimètres pour spectroscopie RPE, comportant un matériau dosimétrique associé à un liant, qui, selon l'invention, contient de la polycaprolactone (PCL).

La polycaprolactone est un polyester aliphatique biodégradable (obtenue par polymérisation par ouverture de cycle d'ε-caprolactone) qui présente une température de fusion basse (de l'ordre de 60 degrés Celsius), ce qui facilite sa mise en oeuvre avec des moyens de chauffage modestes.

A cet égard, on propose un procédé de production de dosimètre comportant l'étape de chauffer la PCL à une température supérieure à sa température de fusion, de préférence à au moins 140 degrés Celsius, puis d'y ajouter le matériau dosimétrique pour former une pate homogène déformable qui peut être mise en forme par moulage, injection, extrusion, ou tout autre procédé adapté. Les dosimètres peuvent être facilement façonnés selon toute forme désirée, notamment des fils, des plaques de faible épaisseur (notamment inférieure à un millimètre), des billes, des cylindres, des cubes.

Il s'agit donc selon l'invention de réaliser un mélange intime du matériau dosimétrique et de la PCL, et non un simple recouvrement du matériau dosimétrique par la PCL. Ce procédé permet d'obtenir des dosimètres mécaniquement résistants. Néanmoins, ils s'avèrent sécables à l'aide d'un outil tranchant, ou usinables très facilement. Il est possible de réaliser des dosimètres de petite taille, par exemple des sphères de l'ordre du millimètre de diamètre.

Ainsi utilisé comme liant selon l'invention, il a été vérifié que la PCL ne modifie très peu après irradiation le spectre RPE de L-α-alanine contenu dans le dosimètre. En effet, bien que la PCL induit un signal RPE perturbateur après irradiation, ce signal radio-induit décroit très rapidement jusqu'à disparaître en quelques heures à température ambiante, de sorte qu'après une durée de moins de 24 heures et à température ambiante, le spectre du dosimètre de l'invention irradié présente toutes les caractéristiques d'un spectre standard de L-α-alanine irradié. Le signal intrinsèque de la PCL présent avant irradiation est de très faible intensité.

La PCL comporte d'autres avantages qui la rendent particulièrement adaptée à la dosimétrie RPE.

Tout d'abord, la PCL est un matériau biocompatible de sorte que des dosimètres élaborés selon l'invention peuvent être insérés dans un organe pour y être irradiés en même temps que l'organe. Il est dès lors possible de mesurer très précisément la dose de rayonnement reçu par l'organe.

En outre, la PCL est hydrophobe et n'est donc pas soluble dans l'eau, de sorte que les dosimètres de l'invention peuvent être utilisés en milieu aqueux. La PCL à une densité proche de l'eau, ce qui rend le mélange PCL et L-α-alanine également équivalent au tissu. Si une décroissance du signal RPE est bien observée lorsque le dosimètre de l'invention est immergé en milieu aqueux (cette décroissance dépend des échanges avec l'eau et donc de la géométrie du dosimètre et la proportion d'alanine dans le dosimètre), la tenue mécanique du dosimètre n'est pas affectée, contrairement aux pastilles pressées de l'art antérieur.

A cet égard, si le dosimètre doit être utilisé en milieu humique, aqueux, ou directement inséré dans un animal, il est nécessaire de prendre en compte l'effet de l'humidité sur le signal radio-induit, soit en incluant une étape d'humidification pour la préparation des dosimètres utilisés pour l'étalonnage ou de prendre en compte la perte de signal par une correction déterminée expérimentalement. Alternativement, le dosimètre peut être recouvert d'une pellicule de PCL.

Le matériau dosimétrique préféré est la L-α-alanine. Alternativement, on pourra utiliser d'autres matériaux dosimétriques, notamment des acides aminés comme la glycine, la valine, la 2-méthyl-alanine, des composé chimiques comme les formates (de lithium par exemple), les sulfates (de lithium ou de magnésium par exemple), les lactates (de lithium ou de magnésium par exemple), les tartrates (d'ammonium ou de potassium par exemple), l'acide sulfanilique, l'acide malonique, le dithionate de lithium, l'acide ascorbique, des saccharidés comme le sucrose, le sorbitol, le glucose, le galactose, le fructose, le lactose ou encore le mannose, ou encore des matériaux d'origine animale ou végétale comme de l'émail dentaire, les tissus osseux, les composés kératinisés.

Avantageusement, des additifs sont ajoutés comme le Lithium 6 ou le Bore 10 ou les gadoliniums 155 et 157 pour rendre le dosimètre plus sensible aux rayonnements neutroniques.

De préférence, lorsque le matériau dosimétrique est de L-α-alanine, sa proportion de 40 à 80% en masse dans le matériau de l'invention, notamment en vue de son moulage, plus particulièrement de 70 à 80%.

### PRESENTATION DES FIGURES

L'invention sera mieux comprise à la lumière de la description qui suit de modes de réalisations de l'invention donnés à titre d'exemple non limitatif, en référence aux figures des dessins annexés parmi lesquelles :
- La figure 1 est une vue schématique montrant la réalisation de dosimètres de formes et tailles variées avec le matériau de l'invention ;
- La figure 2 est un graphe montrant le spectre RPE d'un mélange PCL/L-α-alanine à 50% avant irradiation, comparé à la mesure du tube sans dosimètre
- La figure 3 est un graphe montrant le spectre RPE d'un mélange PCL/L-α--alanine à 50% selon l'invention, mesuré 24 heures après irradiation à 200 Grays ;
- La figure 4 est un graphe montrant l'effet de l'humidification d'un dosimètre irradié (PCL/L-α-alanine à 50%) après des bains de 10 minutes dans de l'eau. Le dosimètre est humidifié à deux reprises.
- La figure 5 est un graphe montrant les spectres RPE de mélanges de PCL/L-α-alanine à 80% et 50% selon l'invention, mesuré 24 heures après irradiation à 150 Grays;
- La figure 6 est un graphe montrant les spectres RPE d'un dosimètre constitué à 50% de sucrose avant et après irradiation à 200 Grays.

### DESCRIPTION DETAILLEE DE MODES DE MISES EN ŒUVRE PARTICULIERS DE L'INVENTION

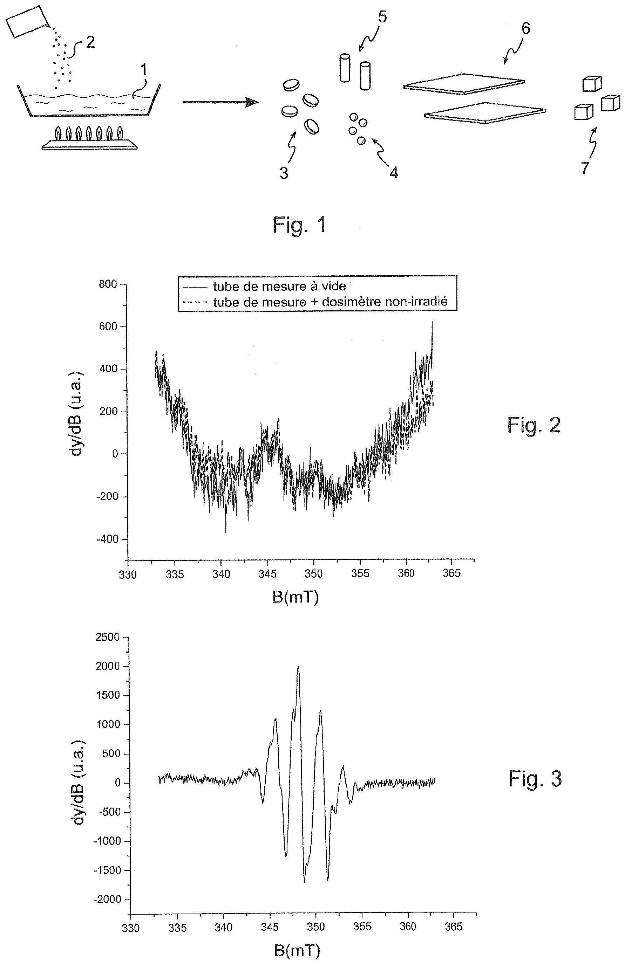

En référence à la figure 1, la mise en oeuvre du matériau de l'invention est particulièrement simple, puisque qu'il suffit de faire chauffer le liant 1 qui, selon l'invention est de la polycaprolactone, de préférence vers 140 degrés Celsius, Puis on ajoute le matériau dosimétrique, ici de l'L-α-alanine 2 en poudre ou sous forme de cristaux. On mélange le tout de façon à obtenir une pate homogène, qui peut être facilement façonnée pour obtenir des dosimètres de forme variée, tels que des pastilles 3, des billes 4, des cylindres 5, des plaques minces 6 ou des cubes 7. Ces dosimètres peuvent avantageusement être de petite taille, de l'ordre du millimètre. On pourra par exemple utiliser des moules sous forme de plaques de silicone comportant des empreintes pour recevoir le matériau encore liquide. Le matériau de l'invention peut encore être utilisé sous forme de pate pouvant être façonnée à la main, avant son durcissement.

Des mesures concernant des dosimètres réalisés avec le matériau selon l'invention ont été effectuées en bande X (9,8 GHz), soit avec des valeurs de champ magnétique (B) de l'ordre de 350 mT.

En particulier, on a réalisé des dosimètres sous les formes suivantes : sphères de 1mm à 7 mm de diamètre, cylindre de 2 à 5 mm de diamètre et jusqu'à 3 cm de longueur, plaques carrés de 1 mm d'épaisseur et 4cm² de surface, anneau de diamètre 1 cm et de section de 2 mm, fil de 1/10 de mm.

La figure 2 illustre le spectre d'un dosimètre sphérique de 4mm de diamètre, dans un matériau à 50% de PCL et 50% de L-α-alanine. Le dosimètre est inséré dans un tube, avant irradiation. On constate que son spectre est très proche de celui du tube seul, illustré sur le même graphe, de sorte que le dosimètre de l'invention a un signal intrinsèque très faible.

La figure 3 illustre le spectre du même dosimètre après irradiation à 200 Gray. On y retrouve les raies d'absorption typiques des dosimètres usuels constitué de L-α-alanine. Le spectre est parfaitement exploitable pour une analyse par spectroscopie RPE.

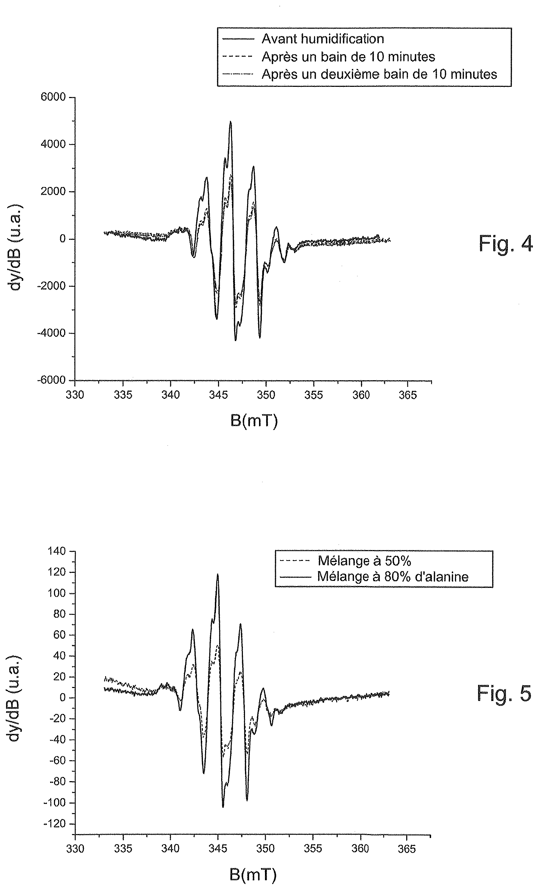

La figure 4 montre la diminution de l'intensité des spectres du dosimètre, ici un cylindre de diamètre 3 mm et de hauteur de 10 mm ; lorsque celui-ci est immergé à plusieurs reprises dans l'eau pendant 10 minutes. On observe une diminution de l'intensité du spectre de 50% après le premier bain, mais l'intensité ne varie plus lors d'un deuxième bain supplémentaire. Après humidification le spectre reste parfaitement exploitable pour une analyse par spectroscopie RPE. On tiendra bien sûr compte de cette baisse d'intensité dans l'étalonnage préalable à l'analyse RPE. En particulier, la procédure d'étalonnage comportera l'étape d'humidifier les dosimètres ou de prendre en compte un facteur de correction pour la perte de signal du à l'humidification Pour limiter ou éviter cette perte de signal, on pourra recouvrir le dosimètre d'une couche mince de PCL.

La figure 5 montre le spectre d'un dosimètre réalisé avec un matériau selon l'invention obtenu en mélangeant 20% en masse de PCL à 80% de L-α-alanine, comparé à celui d'un mélange à 50%. Les spectres sont normalisés à la masse des échantillons. On constate de même que le spectre après irradiation pour le mélange à 80% est parfaitement exploitable pour une analyse par spectroscopie RPE.

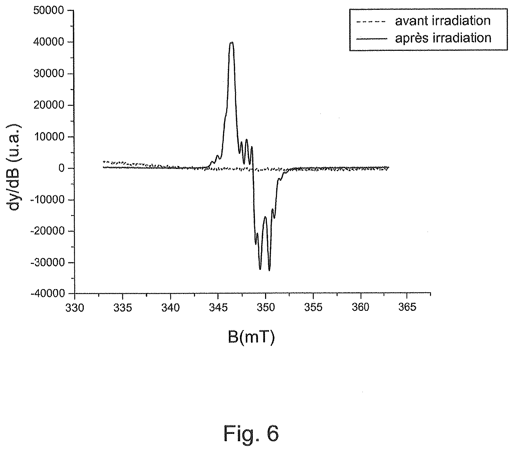

Enfin, la figure 6 montre le spectre avant et après irradiation d'un autre matériau selon l'invention obtenu en mélangeant 50% en masse de PCL, et 50% en masse de sucrose. On obtient un mélange pouvant être facilement façonné pour obtenir des dosimètres de toute forme et toute taille, y compris millimétrique. Encore une fois, on constate que le spectre est parfaitement exploitable pour une analyse par spectroscopie RPE.

L'invention n'est pas limitée à ce qui vient d'être décrit, mais englobe au contraire tout variante entrant dans le cadre défini par les revendications. En particulier, Le matériau de l'invention peut être préparé avec d'autres matériaux dosimétrique mélangés à la PCL, comme des acides aminés tels que par exemple la glycine, la valine, la 2-méthyl-alanine, des composé chimiques comme les formates (de lithium par exemple), les sulfates (de lithium ou de magnésium par exemple), les lactates (de lithium ou de magnésium par exemple), les tartrates (d'ammonium ou de potassium par exemple), l'acide sulfanilique, l'acide malonique, le dithionate de lithium, l'acide ascorbique, des saccharidés comme le sucrose, le sorbitol, le glucose, le galactose, le fructose, le lactose ou encore le mannose, ou encore des matériaux d'origine animale ou végétale comme de l'émail dentaire, les tissus osseux, les composés kératinisés.

En outre, des additifs peuvent être ajoutés au mélange comme le Lithium 6 ou le Bore 10 ou les gadoliniums 155 et 157 pour rendre le dosimètre plus sensible aux rayonnements neutroniques. La proportion de ces additifs reste faible, typiquement inférieure à 5% en masse, venant en remplacement de la masse équivalente de PCL.

Quant à la proportion de matériau dosimétrique, elle pourra varier de 40 à 80% en masse dans le matériau de l'invention, et de préférence de 70 à 80%.

## Revendications

1. Matériau pour la réalisation de dosimètres de radiations pour spectroscopie à résonnance paramagnétique électronique (RPE), ledit matériau comportant un matériau dosimétrique associé à un liant, **caractérisé en ce que** le liant est de la polycaprolactone (PCL).

2. Matériau selon la revendication 1, dans lequel le matériau dosimétrique est en proportion massique de 40 à 80%.

3. Matériau selon la revendication 2, dans lequel le matériau dosimétrique est en proportion massique de 70 à 80%.

4. Matériau selon l'une des revendications précédentes, dans lequel le matériau dosimétrique est de l'L-α-alanine.

5. Matériau selon l'une des revendications précédentes, dans lequel le matériau dosimétrique est choisi parmi des acides aminés, notamment l'L-α-alanine, la glycine, la valine, la 2-méthyl-alanine.

6. Matériau selon l'une des revendications précédentes, dans lequel le matériau dosimétrique est choisi parmi les composés suivants :
- les formates, notamment de lithium,
- les sulfates, notamment de lithium ou de magnésium
- les lactates, notamment de lithium ou de magnésium,
- les tartrates, notamment d'ammonium ou de potassium par exemple,
- l'acide sulfanilique, l'acide malonique, le dithionate de lithium, l'acide ascorbique
- des saccharidés notamment le sucrose, le sorbitol, le glucose, le galactose, le fructose, le lactose ou encore le mannose
- des matériaux d'origine animale ou végétale comme de l'émail dentaire, les tissus osseux, les composés kératinisés.

7. Matériau selon l'une des revendications précédentes, dans lequel une partie de la PCL est remplacée par des additifs propres à rendre un dosimètre fabriqué avec le matériau plus sensibles aux rayonnements neutroniques, de préférence en proportion inférieure à 5% en masse.

8. Matériau selon la revendication 7, dans lequel l'additif est choisi parmi les composés suivants : le Lithium 6, le Bore 10, les gadoliniums 155 ou 157.

9. Dosimètre de radiation pour spectroscopie RPE réalisé au moyen du matériau selon l'une des revendications précédentes.

10. Procédé de production d'un dosimètre de radiations pour spectroscopie RPE, comportant l'étape de chauffer du polycaprolactone (PCL) à une température supérieure à sa température de fusion, de préférence à au moins 140 degrés Celsius, puis d'y ajouter un matériau dosimétrique pour obtenir une pate homogène déformable, puis mettre en forme cette pate par moulage, injection, extrusion, ou tout autre procédé adapté.

11. Procédé d'analyse par spectroscopie RPE d'un dosimètre obtenu selon le procédé de la revendication 10, comportant l'étape dans la procédure d'étalonnage d'humidifier les dosimètres ou de prendre en compte un facteur de correction pour la perte de signal du à l'humidification.

## Patentansprüche

1. Material zur Herstellung von Strahlungsdosimetern für die paramagnetische Elektronenresonanz-(EPR)-Spektroskopie, wobei das genannte Material ein dosimetrisches Material umfasst, das mit einem Bindemittel verbunden ist, **dadurch gekennzeichnet, dass** das Bindemittel Polycaprolacton (PCL) ist.

2. Material nach Anspruch 1, bei dem das dosimetrische Material einen Massenanteil von 40 bis 80% hat.

3. Material nach Anspruch 2, bei dem das dosimetrische Material einen Massenanteil von 70 bis 80% hat.

4. Material nach einem der vorhergehenden Ansprüche, bei dem das dosimetrische Material L-α-Alanin ist.

5. Material nach einem der vorhergehenden Ansprüche, bei dem das dosimetrische Material unter Aminosäuren, insbesondere L-α-Alanin, Glycin, Valin, 2-Methylanalin ausgewählt ist.

6. Material nach einem der vorhergehenden Ansprüche, bei dem das dosimetrische Material unter den folgenden Verbindungen ausgewählt ist:
- Formiate, insbesondere Lithium,
- Sulfate, insbesondere Lithium oder Magnesium,
- Lactate, insbesondere Lithium oder Magnesium,
- Tartrate, insbesondere Ammonium oder Kalium zum Beispiel,
- Sulfanilsäure, Malonsäure, Lithiumdithionit, Ascorbinsäure
- Saccharide, insbesondere Sucrose, Sorbitol, Glucose, Galactose, Fructose, Lactose oder auch Mannose
- Materialien tierischen oder pflanzlichen Ursprungs, wie Zahnschmelz, Knochengewebe, keratinisierte Verbindungen.

7. Material nach einem der vorhergehenden Ansprüche, bei dem ein Teil des PCL durch Zusätze ersetzt wird, die dazu geeignet sind, ein mit dem Material hergestelltes Dosimeter empfindlicher für neutronische Strahlungen zu machen, vorzugsweise in einem Massenanteil von weniger als 5%.

8. Material nach Anspruch 7, bei dem der Zusatz unter den folgenden Verbindungen ausgewählt ist: Lithium 6, Bor 10, Gadolinium 155 oder 157.

9. Strahlungsdosimeter für die EPR-Spektroskopie, das mittels des Materials nach einem der vorhergehenden Ansprüche hergestellt ist.

10. Verfahren zur Herstellung eines Strahiungsdosimeters für die EPR-Spektroskopie, umfassend den Schritt des Erwärmens des Polycaprolactons (PCL) auf eine Temperatur über seiner Schmelztemperatur, vorzugsweise auf mindestens 140 Grad Celsius, dann des Hinzufügens zu demselben eines dosimetrischen Materials, um eine verformbare homogene Paste zu erhalten, und dann des Formens dieser Paste mittels Formguss, Spritzguss, Extrusion oder jedes anderen geeigneten Verfahrens.

11. Verfahren zur Analyse mittels EPR-Spektroskopie mit einem Dosimeter, das nach dem Verfahren nach Anspruch 10 erhalten wird, umfassend den Schritt in dem Kalibrierungsverfahren des Befeuchtens der Dosimeter oder des Berücksichtigens eines Korrekturfaktors für den Signalverlust aufgrund der Befeuchtung.

## Claims

1. Material for the production of radiation dosimeters for electron paramagnetic resonance (EPR) spectroscopy, said material including a dosimetric material associated with a binder, **characterized in that** the binder is polycaprolactone (PCL).

2. Material according to claim 1, wherein the dosimetric material is in a proportion of 40 to 80% by weight.

3. Material according to claim 2, wherein the dosimetric material is in a proportion of 70 to 80% by weight.

4. Material according to any one of the preceding claims, wherein the dosimetric material is L-α-alanine.

5. Material according to any one of the preceding claims, wherein the dosimetric material is selected from amino acids, in particular L-α-alanine, glycine, valine, 2-methyl-alanine.

6. Material according to any one of the preceding claims, in which the dosimetric material is selected from the following compounds:
- formates, in particular lithium formates,
- sulphates, in particular lithium or magnesium sulphates,
- lactates, in particular of lithium or magnesium,
- tartrates, in particular of ammonium or potassium, for example,
- sulphanilic acid, malonic acid, lithium dithionate, ascorbic acid,
- saccharides, in particular sucrose, sorbitol, glucose, galactose, fructose, lactose or mannose,
- materials of animal or vegetable origin such as dental enamel, bone tissue, keratinized compounds.

7. Material according to any one of the preceding claims, wherein a portion of the PCL is replaced by additives adapted to render a dosimeter made of the material more sensitive to neutron radiation, preferably in a proportion of less than 5% by weight.

8. Material according to claim 7, wherein the additive is selected from the following compounds: lithium 6, boron 10, gadolinium 155 or 157.

9. Radiation dosimeter for EPR spectroscopy made using the material according to any one of the preceding claims.

10. Process for production of a radiation dosimeter for EPR spectroscopy, including the step of heating the polycaprolactone (PCL) to a temperature above its melting point, preferably at least 140 degrees Celsius, and then adding a dosimetric material thereto to obtain a homogeneous deformable paste, then forming this paste by moulding, injection moulding, extrusion or any other suitable method.

11. Method of EPR spectroscopic analysis of a dosimeter made by the process according to claim 10, including the step in the calibration procedure of humidifying the dosimeters or taking into account a correction factor for the loss of signal through humidification.
